Europäisches Patentamt

(19) European Patent Office

Office européen des brevets

(11) Veröffentlichungsnummer: **0 231 538**
B1

## (12) EUROPÄISCHE PATENTSCHRIFT

(45) Veröffentlichungstag der Patentschrift:
18.07.90

(51) Int. Cl.⁵: **G01D 5/38**, G01D 5/26

(21) Anmeldenummer: 86202143.3

(22) Anmeldetag: 02.12.86

(54) Optischer Weg-Sensor mit einem Filter.

(30) Priorität: 06.12.85 DE 3543179

(43) Veröffentlichungstag der Anmeldung:
12.08.87 Patentblatt 87/33

(45) Bekanntmachung des Hinweises auf die Patenterteilung:
18.07.90 Patentblatt 90/29

(84) Benannte Vertragsstaaten:
DE FR GB

(56) Entgegenhaltungen:
EP-A- 0 132 978
EP-A- 0 163 824
DE-B- 1 921 507
GB-A- 2 138 588

(73) Patentinhaber: **Philips Patentverwaltung GmbH,
Wendenstrasse 35 Postfach 10 51 49,
D-2000 Hamburg 1(DE)**

(84) Benannte Vertragsstaaten: **DE**

(73) Patentinhaber: **N.V. Philips' Gloeilampenfabrieken,
Groenewoudseweg 1, NL-5621 BA Eindhoven(NL)**

(84) Benannte Vertragsstaaten: **FR GB**

(72) Erfinder: **Dammann, Hans, Dr., Eichenstrasse 27,
D-2081 Tangstedt(DE)**
Erfinder: **Orlowski, Reiner Uwe, Dr., Rotdornweg 17,
D-2085 Quickborn(DE)**

(74) Vertreter: **Koch, Ingo, Dr.-Ing. et al, Philips
Patentverwaltung GmbH
Wendenstrasse 35 Postfach 10 51 49,
D-2000 Hamburg 1(DE)**

ACTORUM AG

**Beschreibung**

Die Erfindung bezieht sich auf einen optischen Wegsensor zur Bildung eines wegabhängigen Signals mittels eines aus zwei in Strahlrichtung hintereinander angeordneten Teilen bestehenden Filters, dessen einer Teil um die zu messende Weglänge senkrecht zur Strahlrichtung verschiebbar ist, mit einer Lichtquelle, deren Strahlenbündel das Filter durchstrahlt und Licht mindestens zweier Wellenlängen enthält, und mit einem die Intensität der durch das Filter in unterschiedlichem Verhältnis gedämpften Lichtanteile erfassenden Detektor sowie mit einer Einrichtung zur Ermittlung der zu messenden Weglänge durch Vergleich der Intensitäten der die verschiedenen Wellenlängen aufweisenden Lichtanteile.

Bei einer nach der EP-A 95 273 bekannten Anordnung besteht das Filter aus mindestens zwei in Verschiebungsrichtung aufeinanderfolgend zusammengesetzten Filterelementen, die jeweils nur Licht einer der gesendeten Wellenlänge durchlassen. Die Wegabhängigkeit ergibt sich dadurch, daß bei Verschiebung des Filters unterschiedliche relative Anteile der verschiedenfrequenten Lichtanteile in einen Detektor gelangen.

Eine Anordnung der eingangs genannten Art ist durch die GB-A 2 138 588 bekannt. Dort bestehen die relativ zueinander beweglichen Filterlemente jeweils aus einem Substrat, auf welchem mehrere Filterstreifen aus einem Material aufgebracht sind, welches eine wellenselektive Durchlässigkeit hat.

Durch die ältere, als EP-A 163 824 nachveröffentlichte Anmeldung ist eine Vorrichtung zur photoelektrischen Erzeugung von elektrischen Signalen bei nicht näher beschriebenen Lagemeßeinrichtungen bekannt. Dort werden Referenzimpulse gebildet, welche von der Relativverschiebung von Gitterelementen abhängig sind. Die Gitterelemente weisen jeweils Gitterbereiche mit unterschiedlichen Gitterperioden auf. Beugungsbilder 0. und höherer Ordnung werden zur Bildung von Referenzsignalen optisch und/oder elektrisch zusammengefaßt. Die Referenzsignale dienen nicht als Maß für die zu messende Weglänge.

Optische Wellenlängen-Filter sind teure Bauelemente. Der Aufwand zur Herstellung der bekannten, aus verschiedenen Filtern zusammengesetzten Elemente ist erheblich.

Der Erfindung liegt die Aufgabe zugrunde, ein wegsensitives optisches Element zu schaffen, welches einfach mit kostengünstig herstellbaren Bauelementen aufgebaut ist.

Lösung gelingt dadurch, daß das Filter aus zwei Phasengittern mit jeweils vorbestimmter Gitterperiode besteht, und daß die Beugungsstrahlen 0. Ordnung der verschiedenen frequenten Lichtanteile auf den Detektor gerichtet sind.

Phasengitter sind einfach aufgebaute Elemente und kostengünstig herstellbar. Derartige Elemente sind z.B. durch die DE-OS 33 03 623 bekannt.

Werden zwei Phasengitter relativ zueinander verschoben, ändert sich der Anteil des in die 0.Ordnung gebeugten Lichts für verschiedene Wellenlängen im allgemeinen unterschiedlich stark. Dann ist beispielsweise der Quotient der detektierten Lichtintensitäten zweier Lichtanteile mit verschiedener Wellenlänge als Maß für die Verschiebung der beiden Filter auswertbar. Besonders geeignet sind solche Phasengitter, die bei Verschiebung auf Licht verschiedener Wellenlänge erheblich unterschiedlich einwirken.

Bei der Verwendung von zwei Transmissionsgittern wird die optische Strahlung von einer Sendefaser durch die Gitter in eine Empfangsfaser geleitet.

Eine einzige Faser ist sowohl zur Führung der Sendestrahlung als auch der Empfangsstrahlung nutzbar, wenn eines der Gitter als Reflexionsgitter ausgebildet ist.

Besonders frequenzselektive Gitteranordnungen sind erreichbar bei Verwendung insbesondere einstufiger Stufengitter. Vorzugsweise sind die Gitterperiode und die Stufenhöhe beider Gitter gleich groß. Solche Gitter können so ausgelegt werden, daß Strahlen verschiedener Wellenlänge extrem unterschiedlich geschwächt werden.

Eine besonders vorteilhafte Ausführungsart, bei welcher Licht einer Wellenlänge $\lambda_1$ praktisch unbehindert im gesamten Verschiebungsbereich durchgelassen wird, während die Dämpfung des Lichts der zweiten Wellenlänge $\lambda_2$ stark von der Verschiebung abhängig ist, ist dadurch gekennzeichnet, daß die Wellenlängen $\lambda_1$ und $\lambda_2$ zweier Lichtanteile des Strahlenbündels zumindest annähernd im Verhältnis

$$\lambda_1 / \lambda_2 = \frac{2k \pm 1}{2k}$$

zueinander stehen, wobei k eine natürliche positive oder negative ganze Zahl ist, und daß die Stufenhöhe der zweistufigen Phasengitter jeweils

$$d = k \cdot \lambda_1 \cdot \frac{1}{n-1}$$

gewählt ist, wobei n der Brechungsindex des Phasengitter-Materials ist.

Die Erfindung wird anhand der Beschreibung von in der Zeichnung dargestellten vorteilhaften Ausführungsbeispielen näher erläutert.

Figur I zeigt den prinzipiellen Aufbau eines erfindungsgemäßen optischen Wegsensors mit zwei gegeneinander verschiebbaren transparenten Phasengittern.

Figur 2 zeigt eine Ausführungsart mit einem transparenten Phasengitter und einem Reflexionsgitter.

Figur 3 zeigt Verläufe der Lichtintensitäten zweier optischer Strahlen verschiedener Wellenlänge nach dem Durchgang durch die Phasengitter in Abhängigkeit der Wegverschiebung eines der Gitter.

Figur 4 zeigt die Struktur zweier besonders vorteilhafter Phasengitter

Figur 5 zeigt die Phasenwinkel der Gitter nach Figur 4 bei der Verschiebung "0".

Figur 6 zeigt die Phasenwinkel der Gitter nach Figur 4 bei der relativen Verschiebung "$\Delta x$".

In Figur I bilden die Linsen I und 2 die Sendefaser 3 und die Empfangsfaser 4 aufeinander ab. Zwischen den beiden Linsen besteht ein paralleler Strahlengang durch die Phasengitter 5 und 6, von denen das Phasengitter 6 senkrecht zur Strahlrichtung um einen Wert $\Delta x$ verschiebbar ist. Von der von der Empfangsfaser 3 gesendeten Lichtintensität $I_S$ wird das Licht der 0. Beugungsordnung $I_{E0}$ des aus den beiden Teilgittern 5 und 6 bestehenden Phasengitters in die Empfangsfaser 4 geleitet. Die Lichtintensität $I_{E0}$ ist von der Verschiebung $\Delta x$ abhängig:

$$I_{E0} = I_s \cdot f\,(\Delta x)$$

Die Funktion $f(\Delta x)$ wird durch die geometrische Struktur der beiden Teilgitter bestimmt. Für optische Weg-Sensoren sind solche geometrischen Strukturen besonders vorteilhaft, welche auf Licht einer Wellenlänge möglichst wenig dämpfend und auf Licht einer anderen Wellenlänge stark dämpfend einwirken. Wenn $I_{E0}\,(\lambda_1)$ und $I_{E0}\,(\lambda_2)$ die in die Empfangsfaser 4 dringenden Intensitäten der 0. Beugungsordnung des Lichts der Wellenlängen $\lambda_1$ und $\lambda_2$ sind, so ist deren Quotient ein eindeutiges Maß für die relative Verschiebung $\Delta x$ der beiden Teilgitter 5 und 6. Der Einfluß schwankender Dämpfungen der Sendefaser 3 und der Empfangsfaser 4 sowie gegebenenfalls vorhandener Steckverbindungen geht in das Meßergebnis nicht ein, da derartige Dämpfungen multiplikativ mit gleichem Faktor auf die Lichtanteile beider Wellenlängen einwirken. Dagegen ist der Einfluß der Gitteranordnungen 5 und 6, welcher als Meßeffekt genutzt wird, für beide Wellenlängen sehr unterschiedlich.

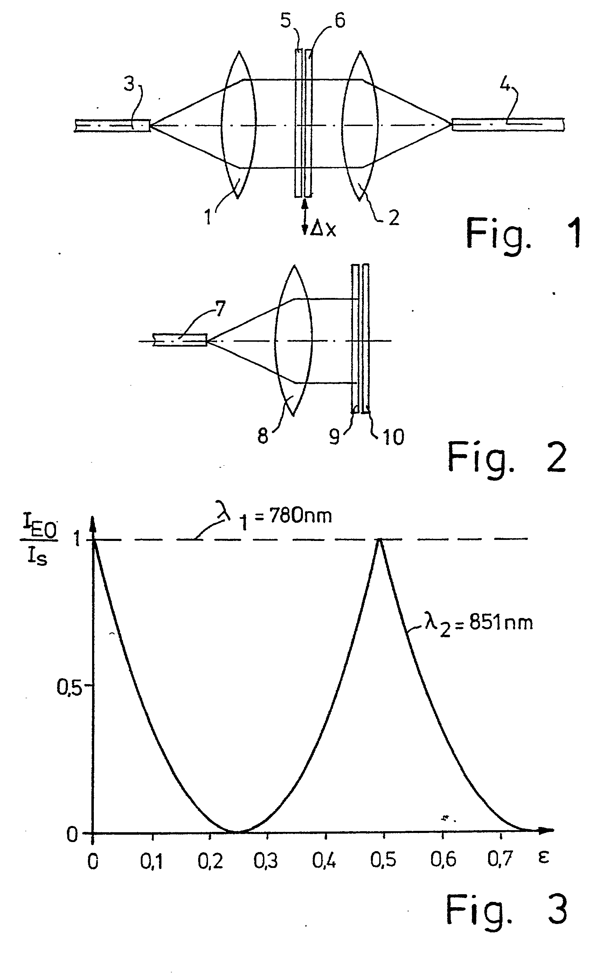

In Figur 2 ist eine abgewandelte Anordnung dargestellt, bei welcher die Faser 7 gleichzeitig der Weiterleitung des gesendeten und des empfangenen Strahls dient. Über die Linse 8 wird die Sendeintensität $I_S$ in paralleler Führung zunächst durch das transparente Phasengitter 9 auf das Reflexionsgitter I0 geleitet. Von dort wird die 0. Beugungsordnung $I_{E0}$ über die Linse 8 zurück in die Faser 7 kollimiert.

Gegenüber der Ausführung nach Figur I wird nur eine Linse benötigt. Der Weg-Sensor muß nur an eine einzige Faser angeschlossen werden. Darüberhinaus sind weniger Justierarbeiten erforderlich.

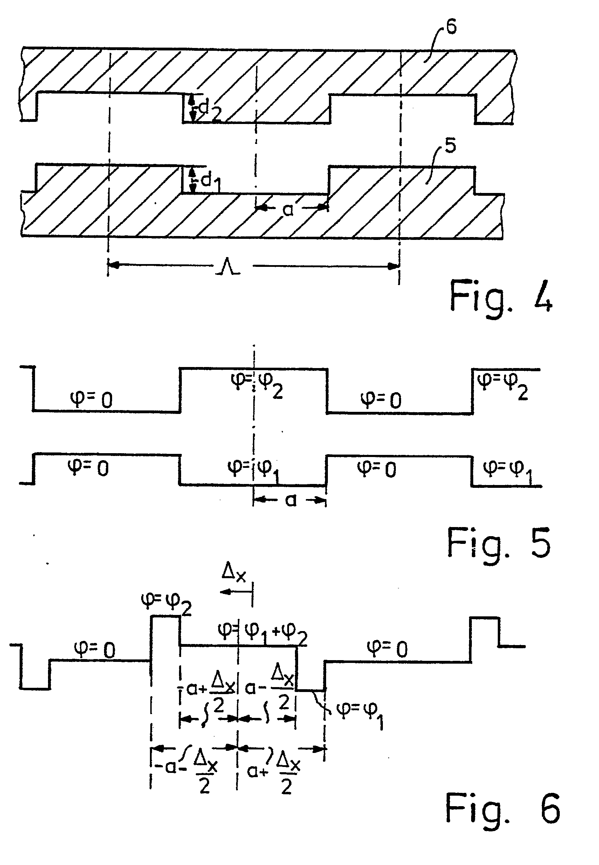

Die beiden Teilgitter 5 und 6 bzw. 9 und I0 können prinzipiell nahezu beliebig ausgelegt sein. Man sollte jedoch anstreben, daß sich der Quotient der Funktionen $f\,(\Delta x)$ für die Wellenlängen $\lambda_1$ und $\lambda_2$ wegabhängig möglichst stark ändert. Geeignete Dimensionierungen sind besonders für einstufige Gitter in einfacher Weise auffindbar. Darüberhinaus sind solche Gitter einfach herstellbar. Bei Ausführung der Gitter nach Figur 4 ergeben sich für die Lichtanteile der Wellenlängen $\lambda_1$ und $\lambda_2$ in Abhängigkeit der relativen Verschiebung $\varepsilon = \Delta x / \Lambda$ ($\Lambda$ = Gitterperiode) die in Figur 3 erkennbaren relativen Intensitäten der empfangenen Strahlen der 0.Beugungsordnung. Licht der Wellenlänge $\lambda_1$ = 780 nm gelangt unabgeschwächt in die Empfangsfaser. Das Licht der zweiten Wellenlänge $\lambda_2$ = 85I nm ändert sich dagegen von der Verschiebung 0 bis zur relativen Verschiebung $\varepsilon$ = 0,25 vom Wert I00 % auf 0 %.

Die optimalen Verhältnisse nach Figur 3 lassen sich mit einer in Figur 4 dargestellten Gitteranordnung zumindest annähernd erreichen. Die Stufenhöhe des ersten Teilgitters 5 mit der Gitterperiode $\Lambda$ beträgt $d_1$, die des zweiten Gitters mit der gleichen Gitterperiode beträgt $d_2$. Der halbe Wert der Breite einer Gitterstufe bzw. einer Gitterlücke hat für beide Teilgitter den Wert a.

Figur 5 zeigt die den in Figur 4 dargestellten Gittern entsprechenden Verläufe des Phasenunterschieds im Falle von Transmissionsgittern:

$$\varphi_1 = -2\pi\,(n-1)\,\frac{d_1}{\lambda} \quad \text{und} \quad \varphi_2 = \frac{2\pi\,(n-1)\,d_2}{\lambda}.$$

In den obigen Gleichungen ist n der Brechungsindex des für die Gitter verwendeten Materials und $\lambda$ die Lichtwellenlänge im Vakuum.

In Figur 6 ist die aus beiden Teilgittern resultierende Gesamtphase $\phi = \phi_1 + \phi_2$ bei gegenseitiger Verschiebung der Teilgitter um den Weg $\Delta x$ dargestellt.

Der resultierende Beugungswirkungsgrad $\eta_0$ für den Strahl der 0. Beugungsordnung beträgt bei einer Gitteranordnung nach Figur 4:

$$\eta_0 = 1+(8c^2-4c)\,[1-\cos(\phi_1+\phi_2)]$$
$$+2\varepsilon[\cos\phi_2+\cos\phi_2-\cos(\phi_1+\phi_2)-1]$$
$$+2\varepsilon^2[2+\cos(\phi_1+\phi_2)+\cos(\phi_1-\phi_2)-2\cos\phi_1-2\cos\phi_2]$$

Dabei wurde $a/\Lambda = c$ abgekürzt. Innerhalb des Verschiebungsbereichs $|\varepsilon|<\Lambda/4$ besteht ein eindeutiger Zusammenhang zwischen $\eta_0$ und $\varepsilon$. Die Funktion $f(\Delta x)$ entspricht dann dem Wert $\eta_0$ und ist im allgemeinen für die Wellenlänge $\lambda_1$ und $\lambda_2$ unterschiedlich. Wählt man $\phi_1 = -\phi_2$, so ergibt sich.

$$\eta 0 = 1+4\varepsilon(\cos\varphi_2-1) + 2\varepsilon^2\left[3+\cos(2\varphi_2)-4\cos\varphi_2\right]$$
$$= (1-4\varepsilon\,\sin^2\frac{\varphi_2}{2})^2.$$

Der Wert $\sin^2(\phi_2/2)$ kann so vorgegeben werden, daß sich für eine Wellenlänge $\lambda_1$ der Wert 0 ergibt, während er für eine andere Wellenlänge $\lambda_2$ den maximalen Wert 1 annimmt. Dda ist dann der Fall, wenn die beiden Wellenlängen $\lambda_1$ und $\lambda_2$ folgender Bedingung genügen:

$$\frac{\lambda_1}{\lambda_2} = \frac{2k \pm 1}{2k}\quad.$$

Dabei ist k ein möglichst klein zu wählende natürliche positive oder negative ganze Zahl.
Die Stufenhöhe d der Gitter muß dann den Wert annehmen:
$$d = k\cdot\lambda_1 / n - 1.$$
Die Kennlinien nach Figur 3 wurden für die Wellenlängen $\lambda_1 = 780$ nm und $\lambda_2 = 851$ nm bei einem Wert k = 6 ermittelt. Der praktisch nutzbare Verschiebungsweg beträgt bei einer Gitterperiode $\Lambda = 100$ µm maximal $\Delta x = 25$ µm.
Eine Messung mit den Wellenlängen $\lambda_1 = 7{,}80$ µm und $\lambda_2 = 851$ µm ergibt eine optimale Empfindlichkeit, jedoch können nicht zu große Abweichungen von den optimalen Werten der Wellenlängen $\lambda_1$ und/oder $\lambda_2$ in Kauf genommen werden.
Bei Verwendung eines Sensor-Aufbaus nach Figur 2 können grundsätzlich die gleichen Dimensionierungsregeln angewendet werden. Es ist allerdings zu beachten, daß das erste Teilgitter zweimal durchstrahlt wird. Infolgedessen ergeben sich erheblich geringere Stufenhöhen d für beide Teilgitter.

## Patentansprüche

1. Optischer Wegsensor zur Bildung eines wegabhängigen Signals mittels eines aus zwei in Strahlrichtung hintereinander angeordneten Teilen bestehenden Filters, dessen einer Teil um die zu messende Weglänge senkrecht zur Strahlrichtung verschiebbar ist, mit einer Lichtquelle, deren Strahlenbündel das Filter durchstrahlt und Licht mindestens zweier Wellenlängen enthält, und mit einem die Intensität der durch das Filter in unterschiedlichem Verhältnis gedämpften Lichtanteile erfassenden Detektor sowie mit einer Einrichtung zur Ermittlung der zu messenden Weglänge durch Vergleich der Intensitäten der die verschiedenen Wellenlängen aufweisenden Lichtanteile, dadurch gekennzeichnet, daß das Filter aus zwei Phasengittern (5 und 6) mit jeweils vorbestimmter Gitterperiode besteht, und daß die Beugungsstrahlen 0.Ordnung der verschiedenen frequenten Lichtanteile auf den Detektor gerichtet sind.

2. Anordnung nach Anspruch 1, dadurch gekennzeichnet, daß beide Phasengitter Transmissionsgitter sind.

3. Anordnung nach Anspruch 1, dadurch gekennziechnet, daß ein Phasengitter (9) ein Transmissionsgitter und das andere ein Reflexionsgitter (10) ist.

4. Anordnung nach einem der Ansprüche 1 bis 3, dadurch gekennzeichnet, daß mindestens eines der Phasengitter ein Stufengitter ist.

5. Anordnung nach Anspruch 4, dadurch gekennzeichnet, daß mindestens ein Phasengitter ein einstufiges Gitter ist.

6. Anordnung nach Anspruch 5, dadurch gekennzeichnet, daß beide Phasengitter einstufig sind.

7. Anordnung naoh einem der Ansprüche 1 bis 6, dadurch gekennzeichnet, daß die Phasengitter die gleiche Gitterperiode haben.

8. Anordnung nach Anspruch 7, dadurch gekennzeichnet, daß die Stufenhöhen $(d_1, d_2)$ der beiden einstufigen Phasengitter gleich sind.

9. Anordnung nach Anspruch 8, dadurch gekennzeichnet, daß die Wellenlängen $\lambda_1$ und $\lambda_2$ zweier Lichtanteile des Strahlenbündels zumindest annähernd im Verhältnis

$$\lambda_1/\lambda_2 = \frac{2k \overset{+}{\underset{-}{}} 1}{2k}$$

zueinander stehen, wobei k eine natürliche positive oder negative ganze Zahl ist, und daß die Stufenhöhen d der zweistufigen Phasengitter jeweils

$$d = k \cdot \lambda_1 \cdot \frac{1}{n-1}$$

gewählt sind, wobei n der Brechungsindex des Phasengitter-Materials ist.

## Claims

1. An optical path sensor for forming a path-dependent signal by means of a filter comprising two parts arranged one after the other in the beam direction, one part of said filter being movable perpendicularly to the beam direction over the path length to be mesured, said sensor including a light source whose radiation beam passes through the filter and comprises light of at least two wavelengths, and a detector detecting the intensity of the light components attenuated in a different ratio by the filter, as well as a device by means of which the path length to be measured is determined by comparing the intensities of the light components of different wavelengths, characterized in that the filter comprises two phase gratings (5 and 6) each having a predetermined grating period, and in that the zero-order diffraction beams of the light components of different frequencies are directed towards the detector.

2. An arrangement as claimed in Claim 1, characterized in that the two phase gratings are transmission gratings.

3. An arrangement as claimed in Claim 1, characterized in that one phase grating (9) is a transmission grating and the other (10) is a reflection grating.

4. An arrangement as claimed in any one of Claims 1 to 3, characterized in that at least one of the phase gratings is a stepped grating.

5. An arrangement as claimed in Claim 4, characterized in that at least one phase grating is a single-step grating.

6. An arrangement as claimed in Claim 5, characterized in that the two phase gratings are single-step gratings.

7. An arrangement as claimed in any one of Claims 1 to 6, characterized in that the phase gratings have the same grating period.

8. An arrangement as claimed in Claim 7, characterized in that the step heights ($d_1$, $d_2$) of the two one single-step phase gratings are equal.

9. An arrangement as claimed in Claim 8, characterized in that the ratio between the wavelengths $\lambda 1$ and $\lambda 2$ of two light components of the radiation beam is at least approximately

$$\lambda_1/\lambda_2 = \frac{2k+1}{2k}$$

in which k is a positive or negative integer and in that the step heights d of the two-step phase gratings are each chosen to be

$$d = k.\lambda_1 . \frac{1}{n-1}$$

in which n is the refractive index of the phase grating material.

## Revendications

1. Détecteur de chemin optique pour la formation d'un signal dépendant du chemin à l'aide d'un filtre consistant en deux parties disposées l'une derrière l'autre dans la direction des rayons, dont une partie peut être déplacée de la longueur du chemin à mesurer, perpendiculairement à la direction du rayon, comprenant une source de lumière, dont le faisceau de rayons traverse le filtre et la lumière contient au moins deux longueurs d'onde, ainsi qu'un détecteur captant l'intensité des fractions de lumière affaiblies dans une proportion différente par le filtre, ainsi qu'un dispositif pour déterminer la longueur de chemin à mesurer par comparaison des intensités des fractions de lumière des différentes longueurs d'onde, caractérisé en ce que le filtre consiste en deux réseaux de phase (5 et 6) ayant chacun une période de ré-

**EP 0 231 538 B1**

seau prédéterminée et que les rayons de diffraction d'ordre 0 des fractions de lumière de fréquences différentes sont dirigés sur le détecteur.

2. Dispositif suivant la revendication 1, caractérisé en ce que les deux réseaux de phase sont des réseaux à transmission.

3. Dispositif suivant la revendication 1, caractérisé en ce qu'un réseau de phase (9) est un réseau à transmission et l'autre est un réseau à réflexion (10).

4. Dispositif suivant l'une quelconque des revendications 1 à 3, caractérisé en ce qu'au moins un des réseaux de phase est un réseau échelette.

5. Dispositif suivant la revendication 4, caractérisé en ce qu'au moins un réseau de phase est un réseau à un seul échelon.

6. Dispositif suivant la revendication 5, caractérisé en ce que les deux réseaux de phase sont à un seul échelon.

7. Dispositif suivant l'une quelconque des revendications 1 à 6, caractérisé en ce que les réseaux de phase ont la même période de réseau.

8. Dispositif suivant la revendication 7, caractérisé en ce que les hauteurs d'échelon ($d_1$, $d_2$) des deux réseaux de phase à un seul échelon sont égales.

9. Dispositif suivant la revendication 8, caractérisé en ce que les longueurs d'onde $\lambda_1$ et $\lambda_2$ de deux fractions de lumière du fasiceau de rayons sont l'une à l'autre au moins à peu près dans le rapport $\lambda_1/\lambda_2 = (2k \pm 1)/2k$, où k est un nombre entier naturel positif ou négatif, et en ce que la hauteur d'échelon d des réseaux de phase à deux échelons choisie est $d = k\cdot\lambda_1/(n-1)$, où n est l'indice de réfraction de la matière du réseau de phase.

Fig. 1

Fig. 2

Fig. 3

Fig. 4

Fig. 5

Fig. 6